(19) Europäisches Patentamt
European Patent Office
Office européen des brevets

(11) EP 0 230 821 B1

(12) **FASCICULE DE BREVET EUROPEEN**

(45) Date de publication et mention de la délivrance du brevet:
**19.03.1997 Bulletin 1997/12**

(51) Int Cl.[6]: **C10L 5/44**

(21) Numéro de dépôt: **86402831.1**

(22) Date de dépôt: **16.12.1986**

(54) **Nouveau matériau ligno-cellulosique thermocondensé, procédé et four pour l'obtenir**

Wärmekondensiertes ligno-zellulosehaltiges Material, Verfahren und Ofen zu seiner Herstellung

Thermally condensed ligno-cellulose material, process and oven for obtaining it

(84) Etats contractants désignés:
**AT BE CH DE ES FR GB IT LI LU NL SE**

(30) Priorité: **18.12.1985 FR 8518765**

(43) Date de publication de la demande:
**05.08.1987 Bulletin 1987/32**

(73) Titulaire: **ASSOCIATION POUR LA RECHERCHE ET LE DEVELOPPEMENT DES METHODES ET PROCESSUS INDUSTRIELS (ARMINES)**
**F-75272 Paris Cédex 06 (FR)**

(72) Inventeur: **Bourgeois, Jean-Paul**
**F-94000 Créteil (FR)**

(74) Mandataire: **Fruchard, Guy et al**
**CABINET BOETTCHER**
**23, rue la Boetie**
**75008 Paris (FR)**

(56) Documents cités:
**EP-A- 0 073 714**
**CH-A- 246 214**
**DE-A- 3 424 491**
**FR-A- 839 732**
**FR-A- 953 004**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention a pour objet un nouveau matériau ligno-cellulosique dit thermocondensé, un procédé pour l'obtention de ce matériau ligno-cellulosique thermocondensé par traitement thermique isotherme de matière ligno-cellulosique, et un four pour mettre en oeuvre ce procédé.

Le mot thermocondensé désigne ici une matière ligno-cellulosique qui a subi des réactions chimiques s'accompagnant d'une élimination d'eau de constitution et éventuellement de réactions de décarboxylation interne.

C'est en particulier le cas des réactions qui mettent en jeu des hétérocycles du type pentosane

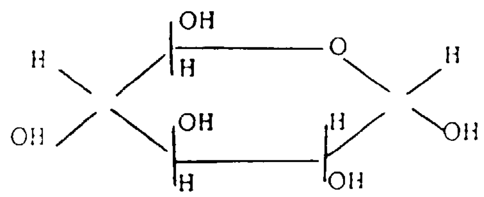

qui peuvent provoquer par pontage l'élimination de molécules $H_2O$.

Les traitements thermiques déjà connus du bois et des matériaux ligno-cellulosiques, et en particulier du bois, comprennent principalement des opérations de carbonisation et de torréfaction, auxquelles correspondent des installations spécifiques bien adaptées, et qui se différencient par le niveau de la température à laquelle la matière ligno-cellulosique est soumise. Schématiquement, la torréfaction consiste à exposer brièvement au contact de l'air, sous l'influence d'un feu direct, la matière ligno-cellulosique à une température inférieure à 300°C de façon à provoquer une carbonisation incomplète. Les produits obtenus sont qualifiés indifféremment de bois roux, bois torréfié ou charbon roux sans qu'une corrélation apparaisse entre la nature du traitement thermique pratiqué et la constitution du produit torréfié obtenu. La carbonisation s'effectue à des températures plus élevées, de préférence voisines de 450°C, en vue de l'élimination maximale des goudrons qui sont générés par la destruction profonde de la matière ligno-cellulosique et qui sont impropres à certaines applications du produit obtenu.

Dans l'état de la technique, illustré en particulier par les documents FR-A-839732 et 872164 ou DE-A-2802.213, on considère que le niveau thermique du traitement suffit à caractériser le produit obtenu qui est appelé bois roux (torréfié) ou charbon de bois selon que la gamme critique de 270°-300°C a été franchie ou non. Cette gamme est liée, en effet, à l'apparition d'une exothermicité des réactions thermochimiques de décomposition de la matière ligno-cellulosique.

En outre, les produits obtenus, bois torréfié ou charbon de bois, n'ont pas une grande homogénéité. Pour le bois torréfié ou bois roux, les traitements thermiques appliqués jusqu'à présent ne permettent pas d'obtenir des produits homogènes ; ceux-ci sont caractérisés surtout par leur couleur ou leur apparence superficielle. Les moyens mis en oeuvre pour les obtenir sont des moyens convectifs utilisant pour source d'énergie des gaz de combustion ou de l'air chaud à des températures de l'ordre de 280 à 300°C. Cette zone de températures est d'ailleurs définie de façon très large et souvent contradictoire selon les documents. Dans la pratique, le produit obtenu est fortement dépendant de son humidité initiale et de sa granulométrie. Le produit peut même être carbonisé plus ou moins profondément même quand les conditions indiquées sont respectées, s'il ne contient pas une humidité suffisante capable de modérer le flux thermique auquel il est soumis. De toute façon, le produit obtenu est fortement hétérogène et ne peut répondre à des caractéristiques chimiques et physico-chimiques définies.

Le document EP-A-0073714 apporte une première précision permettant d'obtenir une meilleure homogénéité du produit final qui est caractérisé simultanément par son pouvoir calorifique, son hygroscopicité, sa teneur en carbone fixe. Mais pour obtenir ce produit, il est obligatoire de procéder dans un milieu neutre, gazeux ou humide, sans dépasser 280°C, pendant une durée qui dépend de la grosseur des morceaux traités et qui peut aller de 30 mn à 5 heures. Ces conditions ainsi imposées ont pour but de ne pas déclencher de réactions de pyrolyse locale qui sont rapidement incontrôlables, parce que le procédé repose sur l'idée que les réactions de pyrolyse ne se déclenchent pas en-dessous de 280°C.

Cependant, le produit torréfié obtenu contient une valeur élevée de carbone fixe (35 %), ce qui est l'indice d'un taux de carbonisation important par résinification de la structure ligno-cellulosique.

De plus, les conditions d'exécution du traitement thermique sont peu favorables à un processus continu de production industrielle.

Or, il a été constaté maintenant, par des essais à l'aide de microanalyse enthalpimétrique et d'analyse microgravimétrique, que :

- toute réaction de transformation thermique de la matière ligno-cellulosique est en fait exothermique même en-dessous de 280°C,

- en-dessous de cette température, les réactions de dégradation thermique de la matière ligno-cellulosique peuvent être classées en deux catégories à cinétiques différentes :

  . la première, qui correspond réellement à des réactions de thermocondensation, est cinétiquement rapide mais la vitesse diminue rapidement avec le temps pour s'annuler sensiblement à un niveau d'équilibre du taux de transformation en relation avec la température et la teneur en hémi-cellulose (pentosane) du produit traité.
  . la seconde, qui s'apparente à une réaction de carbonisation avec destruction profonde de la structure ligne-cellulosique, est cinétiquement lente dans le domaine thermique envisagé. Elle croît brusquement au-delà de 280°C pour donner une pyrolyse complète du produit.

Il est donc utile, industriellement, de définir des conditions techniques permettant de réaliser à l'échelon macroscopique et de façon continue, spécifique et sélective, les transformations de thermocondensation de la matière ligno-cellulosique de façon à éviter la formation de réactions parasitaires de carbonisation.

Par conséquent, le but principal de l'invention est de parvenir à un procédé industriel et à une installation exploitable commercialement à marche continue permettant de contrôler et/ou d'inhiber à tout instant les réactions exothermiques au cours du traitement thermique de matière ligno-cellulosique afin de réaliser sélectivement la thermocondensation du produit traité.

Selon le procédé de l'invention, à partir de matière ligno-cellulosique à l'état très divisé tel que l'état de particules quelle qu'en soit la forme ou l'état de la sciure, mise préalablement à l'état anhydre, on expose la matière à une température que l'on élève à une valeur comprise entre 200°c et 280°C, le procédé étant caractérisé en ce que :

- on déplace la matière à traiter en un courant dans une direction entre deux points éloignés en la soumettant à une agitation à l'intérieur d'un volume de gaz chauds substantiellement exempts d'oxygène, en lui faisant traverser une première zone où sa température est élevée rapidement jusqu'à 200°C ;
- on fait traverser à la matière une deuxième zone où la température desdits gaz chauds est tenue à une valeur choisie entre 220°C et 280°C de façon que la température de cette matière s'élève à ladite valeur choisie de la température en une durée maximum de 5 minutes environ,
- on fait traverser à la matière une troisième zone dans laquelle sa température est sensiblement égale à celle desdits gaz chauds, à ladite valeur choisie de la température pour exécution de la thermocondensation dans des conditions isothermes, pendant une durée ne dépassant pas 30 minutes environ,
- le volume desdits gaz chauds étant mis en circulation dans une direction comprenant plusieurs chemins espacés transversaux à ladite direction de la matière à traiter, créant des courants de gaz chauds qui croisent le courant de matière à traiter.

Le traitement thermique de l'invention correspond à un optimum de thermocondensation pour un minimum de réactions de type carbonisation. Plus précisément, une thermocondensation ne peut être sélectivement obtenue que pour des durées inférieures à 30 minutes ; au-delà, la qualité du produit thermocondensé est altérée par une carbonisation lente qui modifie les propriétés physiques et chimiques du produit final.

Les réactions de thermocondensation commencent à partir de 200°C environ ; le seuil de départ de ces réactions est lié à la teneur en hémi-celluloses du produit ligno-cellulosique traité. Compte tenu du mauvais coefficient de transfert de chaleur des matériaux ligno-cellulosiques, du caractère exothermique des transformations précitées, de l'hygroscopicité du matériau, il est clair que la température localement atteinte, à l'échelle microscopique, par la matière traitée, dépend étroitement du processus opératoire adopté pour le transfert de chaleur et que les caractéristiques chimiques et physico-chimiques du produit obtenu sont en corrélation directe avec l'efficacité des transferts de chaleur et de masse dont la matière de départ est l'objet.

Dans une mise en oeuvre pratique du procédé, la matière traitée traverse une première zone dans laquelle sa température s'élève rapidement jusqu'à 200°C au contact du volume de gaz chauds, une deuxième zone dans laquelle sa température s'élève progressivement jusqu'à la température du volume de gaz chauds pour le déclenchement de la thermocondensation, et une troisième zone dans laquelle sa température est sensiblement égale à celle du volume de gaz chauds pour l'exécution de la thermocondensation dans des conditions isothermes.

Dans la deuxième zone la température est élevée de 200°C à la valeur choisie, comme expliqué par ailleurs, entre 220° et 280°C et cette température est maintenue dans la troisième zone.

L'étude quantitative de la thermicité des transformations thermo-chimiques du bois montre en effet que, contrairement à ce qui est implicitement indiqué dans l'art antérieur, l'enthalpie des réactions de thermocondensation de la matière ligno-cellulosique est sensiblement indépendante de la température dans la gamme des températures de torréfaction.

En revanche, les cinétiques de ces transformations sont très corrélées à la température. Ceci indique que la

constitution du produit final dépend fortement du profil thermique imposé à la matière pendant toute sa transformation. A chaque instant du traitement thermique ont lieu des échanges de flux thermiques entre la matière et la source de chaleur. Pour obtenir un traitement isotherme, ces flux thermiques doivent être tels qu'ils ne modifient pas sensiblement les températures de la source, ni ne provoquent une élévation de la température de la matière à un niveau supérieur à celui de la source (à quelques degrés près).

On obtient ce résultat en réalisant selon l'invention une convection très vive entre une phase gazeuse, qui constitue la source de chaleur et la matière traitée. La phase gazeuse est recyclée en permanence pour permettre une régulation précise de son niveau thermique. Le mode d'écoulement entre la phase gazeuse et la matière est de préférence du type à courants croisés afin de rapprocher au mieux l'ensemble des conditions de traitement en couche mince favorable à l'homogénéité du traitement.

On se reportera maintenant aux dessins annexés pour décrire à titre d'exemple un four permettant la mise en oeuvre du procédé de l'invention. Dans ces dessins :

- La figure 1 est une vue générale schématique d'un four de traitement thermique à courants croisés,
- La figure 2 est un graphique qui indique les températures en °C à droite en ordonnées en fonction du temps en minutes en abcisses et à gauche en ordonnées l'évolution de la masse de la matière traitée.

La figure 1 montre un générateur de gaz chauds 1 contenant de préférence un brûleur à gaz 2 alimenté en gaz de dilution par un ventilateur 3 et ayant une canalisation 4 de sortie des gaz de combustion. Un four 5, allongé, disposé horizontalement bien qu'une inclinaison modérée par rapport à l'horizontale soit possible si on le désire, est équipé d'un arbre central 6 accouplé en rotation à une extrémité à un groupe moto-réducteur 7. Le four 5 est limité par une paroi latérale 8 et l'arbre central 6 est pourvu de moyens 9, radiaux, d'agitation et de déplacement ; ces moyens 9 s'étendent en sens radial jusqu'à proximité de la paroi latérale 8 et ils sont espacés les uns des autres dans le sens longitudinal de l'arbre central 6 et du four 5 par des intervalles 10. A la partie inférieure du four 5, dans les intervalles 10, sont prévues des ouvertures par lesquelles pénètrent des conduits 11 qui proviennent de la canalisation 4 et qui dirigent les gaz de combustion de cette dernière à l'intérieur du four 5. Ce dernier a dans sa partie centrale supérieure un collecteur des gaz 12 relié à une canalisation d'évacuation 13 qui aboutit à l'entrée du ventilateur 3. Les gaz suivent, dans l'ensemble, un trajet substantiellement radial à l'intérieur du four 5, principalement dans sa partie inférieure comme indiqué en trait mixte. Avec un four plus long il serait opportun de prévoir plusieurs collecteurs de gaz 12 espacés dans le sens longitudinal du four pour favoriser la circulation radiale des gaz de combustion qui viennent du brûleur 2.

A une extrémité et à sa partie supérieure, le four 5 est relié à une trémie de chargement 14 dont les ouvertures inférieure et supérieure sont équipées d'un registre de fermeture 15A,15B. A son extrémité opposée et à sa partie inférieure le four 5 est relié à une trémie de déchargement 16 dont les ouvertures supérieure et inférieure sont équipées aussi d'un registre de fermeture 17A, 17B. La matière traitée descend dans le four 5 à partir de la trémie de chargement 14 et elle est déplacée en même temps qu'elle est agitée par les agitateurs radiaux 9 dans le sens longitudinal du four 5, jusqu'à la trémie de déchargement 16, selon un trajet indiqué par un trait continu avec des flèches suggérant que la matière est soulevée, puis elle retombe, pendant sa progression, à la fois sous l'effet des agitateurs radiaux 9 et des courants de gaz de combustion qui arrivent par les conduits 11.

Pendant le fonctionnement, en régime continu établi, la vapeur d'eau qui est produite par les réactions de thermocondensation de la matière ligno-cellulosique est recyclée constamment par le ventilateur 3. Les gaz de combustion fournis par le brûleur 2 sont utiles principalement pour la montée en température au démarrage et, ensuite, uniquement pour l'entretien de la température. A la partie supérieure du four 5, à son extrémité où se trouve la trémie de déchargement 16, est prévue une ouverture d'évacuation 18 par où peuvent s'échapper les gaz en excédent, en traversant une enceinte finale 20.

De ce qui précède, il ressort clairement que les gaz chauds et la matière traitée circulent selon des courants croisés. Juste avant le registre 17A de la trémie de déchargement 16, une plaque transversale 19 s'étend à la partie inférieure du four 5, après le dernier agitateur radial 9. Cette plaque transversale 19 limitée en hauteur détermine l'épaisseur de la couche de matière traitée qui existe en permanence dans le four, en progression de l'entrée vers la sortie. Ce courant de matière entre deux points éloignés du four est traversé par des courants de gaz chauds qui suivent pendant leur recyclage des chemins parallèles espacés qui croisent le courant de matière traitée.

Le brûleur 2 fournit un volume régulé (par des moyens non représentés) de gaz chaud (pratiquement exempt d'oxygène) à une température telle que sa dilution dans le circuit de recyclage maintient les gaz à leur entrée dans le four 5 à une valeur sensiblement constante et correspondant à la température de thermocondensation désirée, c'est-à-dire dans une gamme comprise entre 220° et 280°C. Cette gamme thermique est liée à l'essence de bois traitée. Par exemple, un bois feuillu tel que hêtre, châtaignier, ... est traité de préférence à une température de 15 à 20°C plus faible qu'un bois résineux tel que pin, sapin, ... En effet, la température de traitement est en relation avec la teneur en hémi-cellulose de la matière traitée. La durée du séjour du produit dans le four est assurée par la plaque transversale 19 permettant de fixer le volume occupé par la matière dans le four. Un dispositif d'alimentation et de soutirage synchrone régule le débit de la matière première et du produit fini en commandant les registres 15A,15B et 17A,17B. L'ensemble est maintenu à la pression atmosphérique.

La conception et le fonctionnement du four sont tels que l'on obtient une grande porosité apparente du lit de copeaux facilitant la circulation du gaz. Le taux de recyclage du gaz est élevé et correspond à un temps de séjour très court de ces gaz dans le réacteur compris entre 1 et 10 secondes. Le temps de séjour de la matière en cours de traitement isotherme est de préférence de l'ordre d'une trentaine de minutes pour une matière divisée telle que des petits copeaux ou de la sciure.

Ces conditions opératoires permises par le four de l'invention assurent une quasi-isothermicité de la source de chaleur. La matière traitée, qui a été de préférence séchée avant son entrée dans le réacteur, rencontre le flux gazeux selon un processus de courants croisés. Sa vitesse de montée en température est proportionnelle à l'écart de température entre celle des gaz recyclés (maintenue au moyen du brûleur 2) et sa propre température à l'entrée. Le profil thermique illustré par le graphique de la figure 2 peut donc être parfaitement maîtrisé quand on agit sur la température du gaz recyclé et sur le couple débit--temps de séjour de la matière traitée.

Ce graphique de la figure 2 montre que l'on peut distinguer trois zones, de l'amont vers l'aval, dans le four 5. Dans une première zone a, à l'entrée, les gaz dont la température est représentée par une courbe en trait mixte se réchauffent rapidement, après leur refroidissement pendant leur retour hors du four, pour reprendre une température de 245°C environ qui reste constante dans les zones suivantes b et c jusqu'à leur sortie. La matière traitée est plus froide à l'entrée; il lui faut parcourir les zones a et b pour atteindre la température des gaz de 245°C. Le traitement isothermique proprement dit a lieu dans la zone c qui est parcourue par la matière en 30 minutes. La température de cette dernière est représentée par une courbe en trait plein; malgré les réactions exothermiques qui ont lieu, ainsi qu'on l'a expliqué plus haut, les conditions opératoires du procédé de l'invention sont telles que la température de la matière traitée ne dépasse que de peu celle des gaz, de sorte que la température de 265°C n'est pas dépassée. La courbe en trait interrompu montre que pour une masse de 100 kg de matière traitée anhydre on obtient 76 kg de matériau thermocondensé. Les gaz peuvent être de la vapeur d'eau, du $CO_2$, les vapeurs dues à la thermocondensation ou un mélange de deux ou trois de ces gaz.

On donnera maintenant deux exemples de mise en oeuvre du procédé de l'invention à l'aide du four de la fig. 1. Au cours de ces exemples on précisera encore des détails opératoires du procédé.

Exemple 1

Dans un four tel que celui de la figure 1, on a introduit en continu 100 kg/h (exprimé en bois anhydre) de bois déchiqueté (plaquettes de bois feuillu - hêtre - du type plaquette papetière). L'alimentation a été faite en continu par introduction de charges successives à intervalles de temps réguliers. Le bois avait été préalablement séché et son humidité résiduaire était inférieure à 5 %.

Le niveau de la charge était maintenu constant dans le four 5 à l'aide de la plaque 19 qui permet d'assurer une hauteur constante du lit de copeaux dans le four. Le bois introduit par le registre 15A déplaçait de proche en proche une quantité équivalente de produit qui était évacuée du four par débordement au-delà de la plaque 19, puis était finalement extrait du four par le registre de soutirage 17A. Les registres permettent d'obtenir une bonne étanchéité de façon à minimiser les entrées d'air. L'agitation du lit de copeaux était assurée par la rotation de l'arbre 6 muni de pales 9 qui étaient légèrement inclinées de façon à favoriser l'avancement de la matière dans le four. Le groupe moto-réducteur 7 a permis d'opérer avec la vitesse de rotation souhaitée. Les gaz formés pendant la thermocondensation ont été aspirés dans le collecteur 12 et recyclés à l'aide du ventilateur 3. Le brûleur 2 était réglé pour fonctionner sans excès d'air et la température du mélange gazeux en sortie de générateur était régulée à la valeur voulue. Le volume utile du réacteur était d'environ 0.25$m^3$, et le ventilateur 3 assurait un recyclage des gaz de 375 $m^3$/h.
Le temps de séjour moyen des gaz en contact dans le four avec le produit était de deux secondes environ et le débit massique des gaz traversant le four était de 3 à 4 fois supérieur au débit massique de la matière ligno-cellulosique à travers le réacteur. On ne sortirait pas du cadre de l'invention en faisant varier ce rapport entre 1 et 10 par exemple.

Dans la zone a du four qui correspond à la montée en température rapide de la matière jusqu'à 180 -200°C environ, c'est-à-dire à une température inférieure à celle permettant les réactions de thermocondensation, la matière a séjourné de 3 à 4 minutes. Cette zone correspond à la plus grande partie de la consommation énergétique du procédé. Le temps de séjour dans cette zone a est lié à l'humidité résiduaire ; celle-ci doit être éliminée avant l'arrivée à la zone b.

Dans la zone b, démarrent les réactions de thermocondensation. Corrélativement, le flux énergétique transmis par le gaz au produit diminue au fur et à mesure que celui-ci monte en température, ce qui se traduit par un effet accélérateur sur la cinétique à basse température et un effet modérateur quand on se rapproche de la valeur d'équilibre désirée. Ceci permet de moduler tout au long du processus de thermocondensation la vitesse de cette transformation de façon à répartir sensiblement la chaleur produite par cette réaction.

Dans la zone c, les gaz et la matière traitée sont sensiblement à la même température. La matière est le siège de réactions exothermiques de thermocondensation, mais la vitesse de ces réactions est lente et contrôlée. Le flux thermique correspondant est aisément absorbé par les gaz évitant toute surchauffe locale.

Le temps de séjour moyen dans cette zone c est de 30 minutes.

On a obtenu dans les conditions indiquées de cet exemple, pour une température de traitement (zone c) de 265° C, 76 kg de produit thermocondensé dont l'analyse a donné le résultat suivant :

| | | |
|---|---|---|
| C % = 56,8 | Pentosanes résiduaires : | 1,8 % |
| H % = 5,2 | Carbone fixe : | 27,1 % |
| 0 % = 36,2 | Pouvoir calorifique inférieur : | 5.200 kcal/kg (21.736 kJ) |

Exemple 2

L'exemple 2 est une variante de l'exemple 1 pour ce qui est de la température de traitement dans la zone c, pour la même matière de départ. Avec des températures de traitement isotherme de 230°C, on a recueilli 91 kg de produit thermocondensé ; de 250°C, on a recueilli 84 kg de produit thermocondensé ; de 280°C, on a recueilli 71 kg de matériau thermocondensé.

Ce n'est qu'entre 250 et 265°C qu'est apparue une grande sélectivité de la décomposition des hémi-celluloses vis-à-vis de l'attaque des autres constituants.

Pour ces deux valeurs de la température de thermocondensation, on a observé des teneurs en benzopyrène du matériau thermocondensé de 0,45 µg/kg pour un traitement à 250°C, et de 1,1 µg/kg pour un traitement à 265°C.

Pour ces deux mêmes valeurs de thermocondensation, on observe un pouvoir calorifique inférieur du matériau de 5.100 kcal/kg (21.318 kJ) pour un traitement à 250°C et de 5.215 kcal/kg (21.800 kJ) pour un traitement à 265°C.

Ainsi, il apparaît clairement que les propriétés du matériau thermocondensé conforme à l'invention sont en relation étroite avec la température de traitement dans la zone c.

Ces propriétés dépendent en particulier de l'évolution des trois composés essentiels hémi-cellulose, cellulose, lignine pendant le traitement thermique. Le procédé de l'invention permet de contrôler la transformation de façon sélective de l'une ou l'autre de ces substances.

Le matériau thermocondensé résultant de la thermocondensation de la matière ligno-cellulosique est caractérisé par :

- une teneur en hémi-cellulose résiduaire inférieure à 2 % en masse, ce qui lui confère un grand caractère hydrophobe,
- une absence quasi-totale de goudrons internes. Cette caractéristique est vérifiée par la faible teneur en benzopyrène (inférieure à 2 µg/kg),

La thermocondensation de la matière ligno-cellulosique selon l'invention est remarquable par :

- un rendement énergétique de transformation (énergie retrouvée dans le matériau thermocondensé/énergie de la matière initiale) supérieur à 90 %,
- un rendement massique de fabrication (masse du matériau thermocondensé/masse de la matière initiale anhydre) lié à la température de thermocondensation et à l'essence traitée.

Ce rendement massique est généralement le suivant :

```
                     (thermocondensé à 265°C  :  75 à 80 %
        Feuillu      )
                     (thermocondensé à 250°C  :  80 à 85 %

                     (thermocondensé à 280°C  :  75 à 80 %
        Résineux  -  )
                     (thermocondensé à 265°C  :  80 à 85 %
```

On peut également relier le pouvoir calorifique inférieur (PCI) du matériau thermocondensé au pouvoir calorifique inférieur de la matière ligno-cellulosique traitée de la substance ($PCI_o$) et aux rendements massique (RM) et énergétique (RE) par la relation :

$$PCI = PCI_o \times \frac{RE}{RM}$$

par exemple :

Feuillu thermocondensé 265°C

| PCI | RM | RE | PCI |
|---|---|---|---|
| 4.300°kcal/kg (17.970 kJ) | 76 % | 91,9 % | 5.200 kcal/kg (21.736 kJ) |

Résineux thermocondensé à 280°C

| PCI | RM | RE | PCI |
|---|---|---|---|
| 4.550°kcal/kg (19.000 kJ) | 77,5 % | 92 % | 5.400 kcal/kg (25.570 kJ) |

Le matériau obtenu par le procédé de l'invention peut être utilisé dans diverses applications. Par exemple :

En traitant, selon le procédé de l'invention, du bois de feuillu ou de résineux à une température précisément définie en fonction de l'essence et comprise entre environ 220 et 250°C, on peut obtenir une résinification sélective des hémi-celluloses du bois, cependant que la cellulose et la lignine restent sensiblement intactes. Le traitement isotherme permet d'obtenir un produit homogène ayant une reprise d'humidité inférieure à 5 %, une bonne tenue mécanique mais facile à briser (cassant mais non friable) et ayant la propriété d'absorber des composés organiques.

Le matériau thermocondensé de l'invention se distingue nettement du charbon de bois classique.

La carbonisation s'accompagne de la formation de cycles aromatiques plus ou moins condensé provenant de la destruction de la structure ligno-cellulosique. Pendant cette transformation, une fraction de ces composés aromatiques est libérée sous forme de goudrons. Les benzopyrènes sont des constituants typiques de ces goudrons. On sait que les benzopyrènes ont été reconnus comme ayant des propriétés cancérigènes notables. Leur teneur dans les charbons de bois doit donc être aussi faible que possible. Jusqu'à présent, seule une épuration par traitement à haute température (500°C environ) du charbon de bois permet une élimination de ces constituants nocifs. Ainsi, les charbons de bois "carbo-épurés" ne contiennent que quelques µg/kg de benzopyrène alors que les charbons "forestiers" contiennent fréquemment plus de 20 µg/kg de ces composés.

Le matériau thermocondensé de l'invention contient moins de 2 µg/kg de benzopyrène. Sa facilité d'allumage, la tenue au feu de ses braises nettement supérieure à celle du bois, la forte chaleur dégagée par les braises, en font un matériau bien adapté aux besoins en remplacement du bois et du charbon de bois en raison de l'absence de produits indésirables, de ses qualités mécaniques et calorifiques, et du rendement élevé de sa fabrication.

On insistera maintenant sur le refroidissement du matériau thermocondensé obtenu après le traitement thermique décrit plus haut et illustré par les exemples 1 et 2.

Avec un four tel que celui de la figure 1, le matériau thermocondensé déborde par dessus la cloison transversale 19. Il tombe alors dans la dernière enceinte 20, où pénètre une fraction refroidie des gaz, sur le registre 17A. Dans cette enceinte 20, à température plus basse, et à atmosphère non oxydante, le matériau se refroidit jusqu'à 180°C environ, avant qu'on le laisse descendre dans la trémie 16.

D'autres moyens, connus en soi, peuvent servir à contrôler l'atmosphère dans laquelle le refroidissement se produit. Par exemple, une faible pulvérisation d'eau sur le matériau sortant se traduit par la création d'une atmosphère de vapeur s'accompagnant d'un refroidissement plus rapide. Quel que soit le moyen employé, l'opération importante selon le procédé de l'invention est de ne pas mettre le matériau en contact avec un milieu oxydant tant qu'il n'est pas refroidi en-dessous de 200°C.

Le produit obtenu par le procédé de l'invention peut servir à de nombreuses utilisations. Par exemple : quand la température est limitée à 250°C, on peut obtenir une résinification sélective des hémi-celluloses du bois, alors que celluloses et lignines restent sensiblement intactes. Le procédé de l'invention procure alors un produit homogène, de reprise d'humidité inférieure à 5 %, de bonne tenue mécanique mais facile à broyer (cassant mais non friable) et ayant la propriété d'absorber des composés organiques. Un tel produit remplace avantageusement le bois brut dans les panneaux de particules, de fibres, etc..

D'autre part, les bois thermocondensés de l'invention peuvent être compactés sans liant. On obtient après densification un produit stable, énergétiquement riche, de densité supérieure à l'unité. L'énergie volumique de ce produit est sensiblement moitié de celle du fuel domestique (soit 3 à 4 fois supérieure à celle de la biomasse brute) ce qui

permet un stockage facile de cette source d'énergie renouvelable.

En plus de leur faible teneur en benzopyrène, les bois thermo-condensés ont une grande facilité d'allumage, une tenue au feu des braises nettement supérieure à celle du bois: la forte chaleur dégagée par les braises en fait un matériau bien adapté à la solution du chauffage par le feu à partir du bois, en particulier dans les pays en voie de développement.

## Revendications

1. Matériau ligno-cellulosique thermocondensé caractérisé par les points suivants :

   - teneur en hémi-cellulose résiduaire inférieure à 2 % de sa masse,
   - teneur en benzopyrène inférieure à 2 µg/kg.

2. Procédé de traitement thermique de thermocondensation de matière ligno-cellulosique se trouvant à l'état de petits copeaux ou de sciure et étant à l'état anhydre, selon lequel on expose la matière à une température que l'on élève à une valeur comprise entre 200°C et 280°C, caractérisé en ce que :

   - la matière est soumise dans une première zone à une agitation à l'intérieur d'un volume de gaz chauds substantiellement exempts d'oxygène pour que sa température y soit élevée jusqu'à 200°C en une durée maximum de 5 minutes ;
   - on fait traverser à la matière une deuxième zone où la température desdits gaz chauds est tenue à une valeur choisie entre 220°C et 280°C de façon que la température de cette matière s'élève à ladite valeur choisie de la température en une durée maximum de 5 minutes;
   - on fait traverser à la matière pendant une durée ne dépassant pas 30 minutes, une troisième zone dans laquelle la température des gaz chauds est maintenue à une température identique à celle de la deuxième zone,
   - le volume desdits gaz chauds étant mis en circulation dans une direction comprenant plusieurs chemins espacés transversaux à ladite direction de la matière à traiter, créant des courants de gaz chauds qui croisent le courant de matière à traiter.

3. Procédé selon la revendication 2, caractérisé en ce qu'on fait circuler le volume de gaz chauds à une vitesse qui correspond à une durée moyenne de contact de ces gaz avec la matière à traiter comprise entre 1 et 10 secondes.

4. Procédé selon la revendication 2, caractérisé en ce que lesdits gaz sont : la vapeur d'eau, le gaz carbonique, les vapeurs créées par la thermocondensation de la matière traitée, ou un mélange de deux ou trois de ces gaz.

5. Four pour le traitement thermique de thermocondensation de matière ligno-cellulosique se trouvant à l'état de petits copeaux ou de sciure et étant à l'état anhydre, comprenant une paroi latérale allongée (8) substantiellement horizontale ayant à une extrémité des moyens d'alimentation en matière ligno-cellulosique à traiter, à l'extrémité opposée des moyens d'évacuation de la matière traitée, plusieurs ouvertures d'entrée de gaz chauds, un générateur de gaz chauds (1) ayant une canalisation (4) de sortie de gaz chauds qui est raccordé par des conduits (11) auxdites ouvertures d'entrée de gaz chauds, caractérisé en ce qu'il comprend, en plus, des moyens (9) d'agitation et de déplacement entre lesdites extrémités de la matière en cours de traitement, ces moyens (9) s'étendant jusqu'à proximité de la paroi latérale (8) et étant espacés dans le sens longitudinal du four par des intervalles (10), lesdites plusieurs ouvertures d'entrée de gaz chauds étant prévues à travers ladite paroi latérale (8) respectivement à plusieurs desdits intervalles (10), un circuit de recirculation d'une partie au moins desdits gaz chauds à l'intérieur du four et des moyens de régulation de la température de ces gaz chauds et de la vitesse desdits moyens d'entraînement.

6. Four selon la revendication 5, caractérisé en ce que lesdites ouvertures d'entrée de gaz chauds sont disposées avec une orientation perpendiculaire au sens du déplacement de la matière en cours de traitement.

## Patentansprüche

1. Wärmekondensiertes Lignocellulosematerial, **gekennzeichnet** durch die folgenden Merkmale:

- Restgehalt an Hemicellulose unter 2 Gew%,
- Benzpyrengehalt unter 2 µg/kg.

2. Wärmebehandlungsverfahren zum Wärmekondensieren von Lignocellulosematerial, das in Form von kleinen Spänen oder Sägemehl vorliegt und in einem wasserfreien Zustand ist, wobei das Material einer Temperatur ausgesetzt wird, die man auf einen Wert zwischen 200°C und 280°C erhöht, dadurch **gekennzeichnet,**

   - daß das Material in einem ersten Bereich im Inneren eines im wesentlichen sauerstofffreien Heizgasvolumens umgewälzt wird, um seine Temperatur dort innerhalb eines Zeitraumes von höchstens 5 min auf 200°C zu erhöhen,

   - daß das Material durch einen zweiten Bereich transportiert wird, in dem die Temperatur der Heizgase auf einem ausgewählten Wert zwischen 220°C und 280°C gehalten wird, so daß die Temperatur des Materials innerhalb eines Zeitraumes von höchstens 5 min auf diesen ausgewählten Wert steigt,

   - daß das Material während eines Zeitraumes, der dreißig Minuten nicht übersteigt, durch einen dritten Bereich transportiert wird, in dem die Temperatur der Heizgase auf einem Wert gehalten wird, der gleich dem Temperaturwert im zweiten Bereich ist,

   - wobei man das Heizgasvolumen in einer Richtung zirkulieren läßt, die mehrere voneinander beabstandete, quer zur Richtung des zu behandelnden Materials verlaufende Wege umfaßt, so daß Heizgasströme entstehen, die den Strom des zu behandelnden Materials kreuzen.

3. Verfahren nach Anspruch 2, dadurch **gekennzeichnet,** daß man das Heizgasvolumen mit einer Geschwindigkeit zirkulieren läßt, die einer mittleren Kontaktzeit dieser Gase mit dem zu behandelnden Material entspricht, welche zwischen 1 und 10 Sekunden liegt.

4. Verfahren nach Anspruch 2, dadurch **gekennzeichnet,** daß die Gase die folgenden sind: Wasserdampf, Kohlendioxid, die bei der Wärmekondensation des behandelten Materials entstehenden Dämpfe, oder eine Mischung aus zweien oder dreien dieser Gase.

5. Ofen für die Wärmebehandlung zur Wärmekondensation von Lignocellulosematerial, das in Form von kleinen Spänen oder Sägemehl vorliegt und in einem wasserfreien Zustand ist, umfassend eine im wesentlichen horizontale langgestreckte Seitenwand (8), die an ihrem einen Ende Mittel zum Zuführen von zu behandelndem Lignocellulosematerial und an ihrem gegenüberliegenden Ende Mittel zum Entleeren des behandelten Materials hat, eine Vielzahl von Einlaßöffnungen für die Heizgase sowie einen Heizgasgenerator (1) mit einer Heizgas-Ablaßleitung (4), die über Rohre (11) mit den Einlaßöffnungen für die Heizgase verbunden ist, dadurch **gekennzeichnet,** daß er ferner umfaßt: Mittel (9) zum Umwälzen und zum Befördern des Materials zwischen den oben genannten Enden während der Behandlung, wobei sich diese Mittel (9) bis in die Nachbarschaft der Seitenwand (8) erstrecken und in Längsrichtung des Ofens durch Zwischenräume (10) voneinander beabstandet sind, und wobei die Vielzahl von Einlaßöffnungen für die Heizgase die Seitenwand (8) jeweils an den Zwischenräumen (10) durchdringen, einen Rückführkreislauf für mindestens einen Teil der Heizgase in das Innere des Ofens sowie Mittel zum Regeln der Temperatur der Heizgase und der Geschwindigkeit der Antriebsmittel.

6. Ofen nach Anspruch 5, dadurch **gekennzeichnet,** daß die Einlaßöffnungen für die Heizgase senkrecht zur Bewegungsrichtung des Materials während der Behandlung angeordnet sind.

**Claims**

1. A thermally condensed ligno-cellulose material characterised by the following points:

   - a content of residual hemi-cellulose of less than 2% of its mass, and
   - a content of benzopyrene of less than 2 µg/kg.

2. A heat treatment process for the thermal condensation of ligno-cellulose material in the state of small shavings or sawdust and being in an anhydrous state, wherein the material is exposed to a temperature which is raised to a value of between 200°C and 280°C, characterised in that

- the material is subjected in a first region to agitation in the interior of a volume of hot gases which are substantially free from oxygen so that its temperature is raised therein to 200°C in a maximum period of 5 minutes;
- the material is passed through a second region in which the temperature of said hot gases is maintained at a value selected between 220°C and 280°C in such a way that the temperature of said material rises to said selected temperature value in a maximum period of 5 minutes;
- the material is passed for a period not exceeding 30 minutes through a third region in which the temperature of the hot gases is maintained at a temperature identical to that of the second region,
- the volume of said hot gases being circulated in a direction comprising a plurality of spaced paths which are transverse to said direction of the material to be treated, creating flows of hot gases which cross the flow of material to be treated.

**3.** A process according to claim 2 characterised in that the volume of hot gases is circulated at a speed which corresponds to a mean period of contact of said gases with the material to be treated of between 1 and 10 seconds.

**4.** A process according to claim 2 characterised in that said gases are: steam, carbon dioxide, the vapours created by thermal condensation of the treated material, or a mixture of two or three of said gases.

**5.** An oven for the heat treatment for thermal condensation of ligno-cellulose material which is in the state of small shavings or sawdust and being in an anhydrous state, comprising a substantially horizontal elongate side wall (8) having at one end feed means for ligno-cellulose material to be treated, at the opposite end means for discharge of the treated material, a plurality of intake openings for hot gases, a generator (1) for generating hot gases having an outlet duct (4) for hot gases, which is connected by conduits (11) to said hot gas intake openings, characterised in that it further comprises means (9) for agitation and displacement between said ends of the material in the course of treatment, said means (9) extending to the vicinity of the side wall (8) and being spaced in the longitudinal direction of the oven by spacings (10), said plurality of hot gas intake openings being provided through said side wall (8) respectively at a plurality of said spacings (10), a circuit for recirculation of a part at least of said hot gases in the interior of the oven and means for regulating the temperature of said hot gases and the speed of said entrainment means.

**6.** An oven according to claim 5 characterised in that said hot gas intake openings are disposed with an orientation which is perpendicular to the direction of displacement of the material in the course of treatment.

Fig:1

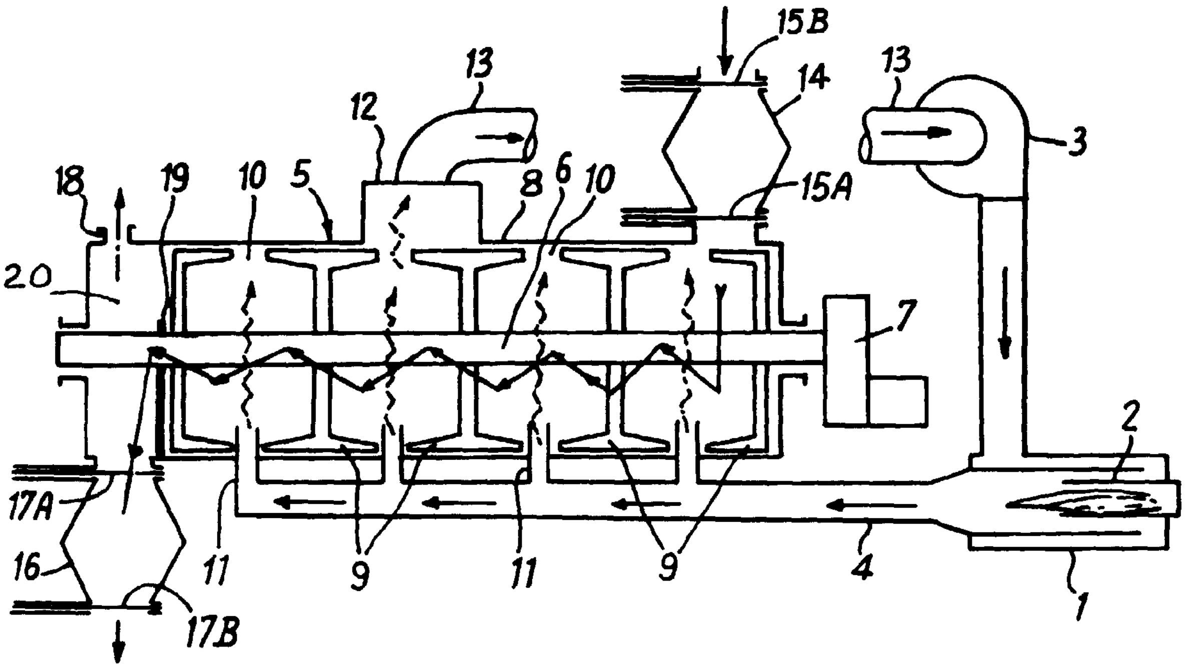
15B
13
14
13
12
3
18
19
10
5
8
6
10
15A
20
7
2
17A
9
11
9
4
16
11
9
11
9
1
17B

Fig:2

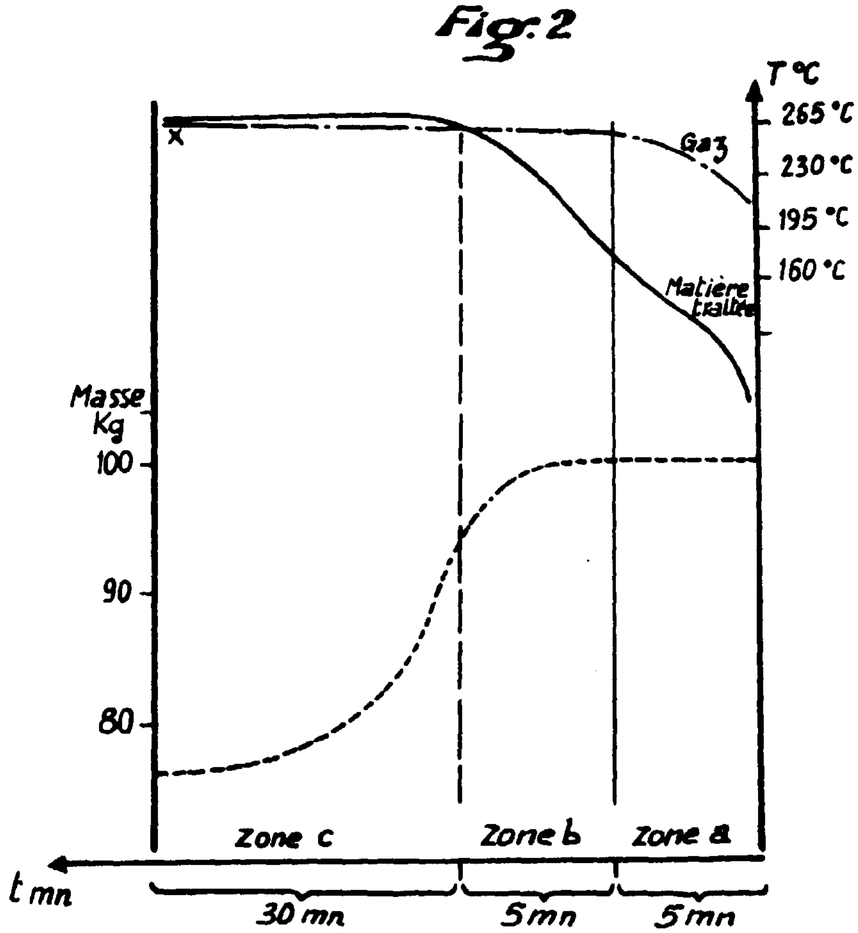
T °C
265 °C
230 °C
195 °C
160 °C
Gaz
Matière traitée
Masse Kg
100
90
80
Zone c
Zone b
Zone a
t mn
30 mn
5 mn
5 mn